# FASCICULE DE BREVET EUROPEEN

(11) **EP 3 178 217 B1**
(45) Date de publication et mention de la délivrance du brevet: **26.09.2018**
(21) Numéro de dépôt: 15753652.5
(22) Date de dépôt: 07.08.2015
(51) Int. Cl.: H04L 29/08, H04L 12/28

(54) **PROCÉDÉ DE CONTRÔLE À DISTANCE DE PÉRIPHÉRIQUES DOMESTIQUES**
VERFAHREN ZUR FERNSTEUERUNG VON HAUSHALTSPERIPHERIEGERÄTEN
METHOD FOR THE REMOTE CONTROL OF HOUSEHOLD PERIPHERALS

(30) Priorité: 07.08.2014 FR 1457688; 07.08.2014 FR 1457689
(43) Date de publication de la demande: 14.06.2017
(73) Titulaire: Bouygues Telecom, 75116 Paris (FR)
(72) Inventeur: BODET, François, F-91460 Marcoussis (FR); PAMBA, Eugène, F-44300 Nantes (FR); RIVIERE, Frédéric, F-44300 Nantes (FR); BOURICAULT, Yann, F-44300 Nantes (FR)
(74) Mandataire: Regimbeau
(86) Numéro de dépôt international: PCT/EP2015/068251
(87) Numéro de publication internationale: WO 2016/020522

(56) Documents cités:
- WO-A1-2013/039760
- US-A1- 2011 054 644
- US-A1- 2011 074 589
- US-A1- 2012 185 197

## Description

### DOMAINE TECHNIQUE GENERAL

La présente invention concerne le domaine de la domotique.

Plus précisément, elle concerne un procédé de contrôle à distance de périphériques domestiques.

### ETAT DE L'ART

A l'heure du tout numérique, de plus en plus d'objets « intelligents » connectables à internet sont disponibles, ces objets allant des consoles de jeu à l'électroménager en passant par les radiateurs, les alarmes ou encore les volets roulants.

La domotique, qui est l'ensemble des techniques permettant le contrôle et l'automatisation (c'est-à-dire l'utilisation nécessitant de moins en moins d'intervention humaine) de ces objets au sein d'une habitation, se voit profondément transformée.

Jusqu'à présent, la diversité des objets, des marques et des protocoles de communication a fait que le contrôle des différents équipements de la maison posait des problèmes de compatibilité et nécessitait une pluralité de boitiers et autres connecteurs divers, à moins de penser l'installation dès la construction du bâtiment.

Le document US2005/0044225 décrit un système de réseau capable de commander à distance des appareils ménagers tout en améliorant la sécurité.

Un autre document US2012/0185197 divulgue un dispositif de surveillance du carburant du site d'origine en conjonction avec un système central distant pour fournir des données d'utilisation de carburant précises utilisées dans la planification des livraisons de carburant.

Le document WO2013/039760 divulgue un dispositif de traitement envoyant à un dispositif de réseau distant une demande d'application d'un dispositif mobile pour utiliser une ressource d'une unité de tête de véhicule comprenant des profils à la fois pour l'unité de tête et le dispositif mobile. Le document FR2979508 a proposé un système de gestion d'équipements domestiques (ou « périphériques ») qui permette l'intégration de n'importe quel équipement de façon totalement transparente pour l'utilisateur, et qui offre une grande variété de services aussi bien pour la surveillance des équipements que pour leur automatisation et leur contrôle à distance dans des scénarii complexes.

Ce système rend techniquement possibles des scénarii impliquant n'importe quels équipements communicant entre eux via un équipement de gestion adapté tel qu'un boitier d'accès à internet (Integrated Access Device, IAD, communément appelé « box ») d'un foyer ou un smartphone, et apporte entière satisfaction. Toutefois, de tels scénarii sont aujourd'hui peu nombreux et limités. Il est en effet très facile de surveiller ou de contrôler à distance un ou plusieurs périphériques (par exemple via un smartphone), mais le développement de scénarii originaux et complexes reste hors de portée de l'utilisateur néophyte, et peut aujourd'hui être accompli uniquement par des développeurs informatiques professionnels.

Il serait ainsi souhaitable de disposer d'une solution simple, conviviale et autonome permettant à des clients ou des partenaires de créer des scénarii domotiques utilisables sur un IAD et permettant de partager ces mêmes scénarii entre des utilisateurs disposant des mêmes périphériques.

### PRESENTATION DE L'INVENTION

Selon un premier aspect, la présente invention se rapporte donc à un procédé de contrôle à distance d'au moins un périphérique connecté à un boitier d'accès internet, le boitier d'accès internet étant relié au réseau internet via un réseau opérateur, le procédé comprenant la mise en oeuvre d'étapes de :
(a) Saisie sur une interface utilisateur d'un équipement connecté au réseau internet de données descriptives d'un scénario d'utilisation du périphérique ;
(b) Génération par un serveur de traitement de scénarii disposé au sein du réseau opérateur d'un fichier d'instructions de contrôle du périphérique à partir des données descriptives du scénario d'utilisation dudit périphérique ;
(c) Compilation par un serveur de gestion de périphériques également disposé au sein du réseau opérateur dudit fichier d'instructions de contrôle en un fichier binaire ;
(d) Instanciation dudit fichier binaire sur le boitier d'accès à Internet en vue d'une exécution de sorte à contrôler le périphérique conformément audit scénario d'utilisation dudit périphérique.

Selon d'autres caractéristiques avantageuses et non limitatives :
- chaque périphérique connecté à un boitier d'accès internet de l'opérateur dudit un réseau opérateur est associé dans le serveur de gestion de périphériques à un identifiant de type de périphérique, l'étape (c) comprenant l'identification du type de chaque périphérique cité dans le fichier d'instructions de contrôle ;
- un fichier binaire de référence est stocké sur le serveur de gestion de périphériques pour chaque type de périphérique, l'étape (c) comprenant l'utilisation des fichiers binaires de référence associés à chacun des types de périphérique identifiés dans le fichier d'instructions ;
- chaque périphérique connecté à un boitier d'accès internet de l'opérateur dudit un réseau opérateur est référencé dans le serveur de gestion de périphériques par un identifiant unique, l'étape (c) comprenant l'identification unique de chaque périphérique cité dans le fichier d'instructions de contrôle ;
- une partie de l'identifiant unique est ledit identifiant de type de périphérique ;
- chaque périphérique référencé dans le serveur de gestion de périphériques est associé à un ensemble de données informatiques comprenant
   - au moins un attribut du périphérique, chaque attribut identifiant un élément contrôlable du périphérique ;
   - une adresse, notamment l'adresse MAC, du boitier d'accès internet auquel le périphérique est connecté.
- lesdites données descriptives du scénario sont exprimées à l'étape (a) en langage naturel, l'étape (b) comprenant des sous-étapes de :
   (b1) Analyse sémantique dudit scénario de sorte à identifier une partie de condition du scénario et une partie de conséquence du scénario, la partie de conséquence étant définie sous la forme d'un n-uplet de paramètres dont au moins :
      - un type de périphérique
      - une action associée au type de périphérique dans une première base de connaissance accessible par ledit boitier d'accès à internet ;
   (b2) Détermination du périphérique désigné dans le scénario à partir d'une seconde base de connaissances stockée sur ledit boitier d'accès à internet en fonction d'au moins le type de périphérique identifié,
   (b3) Génération du fichier d'instructions de contrôle du périphérique en fonction d'au moins l'action identifiée.
      - l'étape (d) comprend le transfert direct du fichier binaire au boitier d'accès à Internet ;
      - l'étape (d) comprend le stockage du fichier binaire sur un serveur de partage de scénarii, en vue d'un téléchargement et d'une instanciation sur au moins un autre boitier d'accès à Internet ;
      - le procédé comprend une étape (e) d'exécution du fichier binaire par le boitier d'accès à Internet de sorte à contrôler le périphérique conformément audit scénario d'utilisation dudit périphérique.
      - le fichier d'instructions de contrôle est en langage de balisage de type XML (eXtensible Markup Language), et le fichier binaire en bytecode ;

Selon un deuxième aspect, l'invention concerne un serveur de gestion de périphériques disposé au sein d'un réseau opérateur connecté au réseau internet, configuré pour :
- Recevoir depuis un serveur de traitement de scénarii également disposé dans le réseau opérateur un fichier d'instructions de contrôle du périphérique généré à partir de données descriptives d'un scénario d'utilisation d'au moins un périphérique connecté à un boitier d'accès à Internet de l'opérateur dudit réseau opérateur ;
- Compiler ledit fichier d'instructions de contrôle en un fichier binaire ;
- Instancier le fichier binaire sur le boitier d'accès à Internet en vue d'une exécution de sorte à contrôler le périphérique conformément audit scénario d'utilisation dudit périphérique.

Selon un troisième aspect, l'invention concerne un système comprenant au moins un serveur de gestion de périphériques selon le deuxième aspect de l'invention, et au moins un boitier d'accès à internet configuré pour exécuter un fichier binaire de contrôle d'au moins un périphérique connecté au boitier de connexion à internet.

Selon un quatrième et un cinquième aspects, l'invention concerne un produit programme d'ordinateur comprenant des instructions de code pour l'exécution d'un procédé le premier aspect de contrôle à distance d'au moins un périphérique connecté à un boitier d'accès internet ; et des moyens de stockage lisibles par un équipement informatique sur lesquels un produit programme d'ordinateur comprend des instructions de code pour l'exécution d'un procédé selon le premier aspect de contrôle à distance d'au moins un périphérique connecté à un boitier d'accès internet.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma du système selon l'invention ;
- la figure 2 représente un exemple de saisie en langage naturel ;
- la figure 3 est un schéma illustrant la mise en oeuvre d'un mode de réalisation d'un procédé selon l'invention.

### DESCRIPTION DETAILLEE

### Architecture

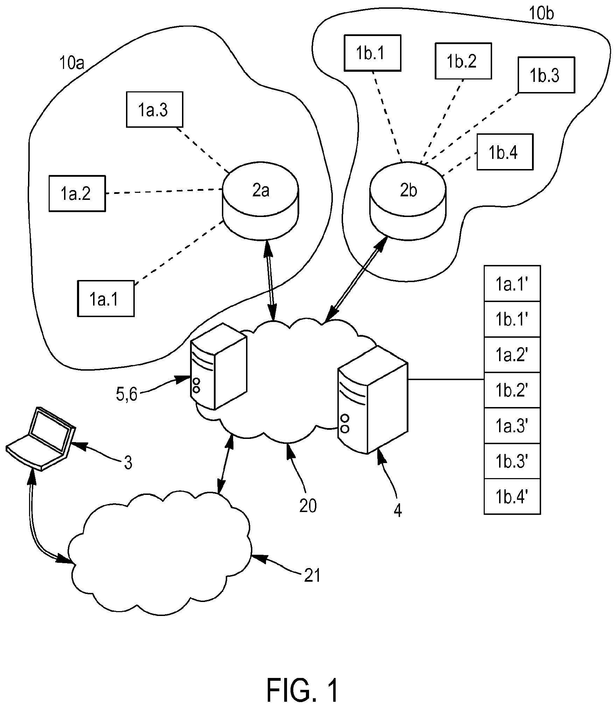

En référence aux dessins et notamment à la **figure 1**, l'invention concerne un procédé de contrôle à distance d'au moins un périphérique 1. Comme expliqué précédemment, on entend par le terme périphérique tout objet domestique connectable, que ces objets soient complexes, par exemple des téléviseurs ou des appareils photo, ou très simples, en particulier des interrupteurs. Le terme périphérique recouvre également tout capteur d'une grandeur physique que l'on pourrait trouver directement dans le foyer ou intégré dans un objet, par exemple un capteur de température.

Chaque périphérique 1 est connecté à un boitier d'accès internet 2 (la « box », appelée comme expliqué un IAD) et chaque boitier d'accès internet 2 est relié au réseau internet 21 via un réseau opérateur 20, souvent appelé « backbone ». Sur la figure 1, les espaces 10a et 10b représentent deux « foyers », chacun ayant respectivement sa box 2a, 2b et ses périphériques 1a.X, 1b.X.

Il est à noter que le terme « boitier d'accès internet » n'est pas limité aux box, et peut par exemple comprendre les téléphones portables disposant d'une connectivité internet, s'il dispose des connectivités nécessaires (voir plus loin).

On notera par ailleurs qu'il n'est pas obligatoire que le boitier d'accès internet 2 soit constitué d'une seule entité physique. En effet, dans le cas d'une box, on peut par exemple séparer le modem (c'est à dire la partie qui permet de convertir un signal numérique en un signal analogique pour l'ADSL, en d'autres termes la première couche OSI) du reste du boitier d'accès internet 2 (c'est à dire les couches OSI autres que la première, la QoS haut niveau, des services (VOIP, LAN...) ou encore de la connectique), les deux entités étant par exemple connectées via un câble ethernet, le Wifi, ou des boitiers CPL. La « deuxième moitié » est généralement un boitier multimédia de type Set-Top Box, qui peut être un équipement de l'opérateur du réseau opérateur 20, mais également un équipement tiers (on parle alors de STB dite OTT, « Over-The-Top »).

On comprendra ainsi que le terme « boitier d'accès internet » englobe les deux entités, et tout périphérique 1 connecté à l'un ou l'autre sera considéré dans la présente description comme connecté à un boitier d'accès internet 2. Cette connexion entre le boitier d'accès internet 2 et les périphériques 1 peut être réalisée de diverses façons et dépend principalement de la connectivité physique dont dispose chaque périphérique 1. En particulier, un périphérique 1 peut être connecté directement au boitier d'accès internet 2 s'il dispose d'une connectivité présente nativement sur le boitier d'accès internet 2 (par exemple une connexion ethernet, usb, HDMI, ou Wifi).

En l'absence de connectivité directe, il est possible d'utiliser une extension matérielle offrant la connectivité physique manquante. Cette extension, communément appelée un « dongle » (ou clé-connecteur en français) se branche sur un des ports du boitier d'accès internet 2 (par exemple un port usb). On peut citer comme exemple de dongle une clé avec un port IrDA (infrarouge): elle offre au boitier d'accès internet 2 une connexion avec tout périphérique 1 qui disposerait d'une telle connectivité via les rayonnements infrarouge, par exemple une télécommande. Un seul dongle est en effet le plus souvent suffisant par type de connectivité. On remarque qu'un dongle offre le plus souvent une connectivité filaire (il consiste alors en un simple adaptateur), mais qu'il peut être comme dans le cas de la clé IrDA un émetteur/récepteur d'une connectivité sans fil. On peut grâce aux dongles gérer dans un seul environnement des objets de différents fabricants qui ont toutes les chances de disposer de connectivités différentes.

Un modem 3G/4G peut être utilisé comme un dongle assez particulier. En effet, un périphérique 1 possédant une connectivité mobile (via un réseau de type 3G, 4G, etc.) est déjà capable de se connecter à internet sans passer par une box 2. Il est à noter que la connectivité mobile via le modem 3G/4G peut être en utilisée en backup de la liaison Wifi.

Le modem 3G/4G peut en outre être lui-même utilisé comme un périphérique présentant des fonctionnalités qui pourraient être offertes aux autres périphériques 1 présentant une connectivité mobile dans la maison 10. Une de ces fonctionnalités pourrait être par exemple la possibilité d'envoi de SMS, éventuellement via la box 2. Ainsi, on peut imaginer comme périphérique 1 un dispositif d'alerte que les personnes âgées peuvent porter autour du cou, et en cas d'appui du bouton, outre l'alerte des secours, le système selon l'invention déclencherait l'envoi de SMS à des numéros préenregistrés.

Dans la suite de la présente description on prendra l'exemple d'un boitier 2 centralisant la connexion des périphériques 1 et la mise en oeuvre des étapes « locales » du présent procédé, mais on comprendra que ces taches peuvent être déléguées à tout équipement « satellite » du boitier 2 tel qu'une STB ou un périphérique OTT. En particulier, on désignera « un équipement du réseau local généré par le boitier d'accès à internet 2 » comme l'équipement centralisant l'intelligence requise par le présent procédé et permettant en particulier l'exécution des scénarios qui seront décrit plus, tout en comprenant que cet équipement est de façon préfère le boitier 2 ou un de ses satellites de type STB ou périphérique OTT.

### Serveurs de gestion de périphériques et de traitement de scénarii

Le système comprend comme on le voit sur la figure 1 un serveur de gestion de périphériques 4 disposé dans le réseau opérateur 20.

Ce serveur de gestion de périphériques 4 est en particulier un (ou plusieurs) équipements disposant d'espaces de stockage de données et de moyens de traitement. Par « serveur de gestion », on comprendra qu'on peut désigner un ensemble de serveurs de l'opérateur du réseau 20.

De façon préférée, le serveur 4 (ou un équipement différent du réseau opérateur 20 mais connecté au serveur 4) stocke une base de données de périphériques 1. Chaque périphérique 1 connecté à un boitier d'accès à internet 2 de l'opérateur du réseau 20 comprend une représentation 1' (appelée « objet virtuel ») dans cette base de données (voir figure 1), et est référencé par un identifiant unique.

Chaque périphérique peut ainsi être associé à un ensemble de données informatiques comprenant :
- un identifiant du type du périphérique (i.e. un modèle d'équipement), qui peut être partie de l'identifiant unique ;
- au moins un attribut du périphérique 1, chaque attribut identifiant un élément contrôlable du périphérique 1 ;
- une adresse, notamment l'adresse MAC, du boitier d'accès internet 2 auquel le périphérique 1 est connecté.

Une telle structure de représentation des périphériques 1 et ses avantages sont illustrés dans le document FR2979508. D'autres données informatiques pouvant être associées à chaque périphérique 1 y sont proposées. On comprendra toutefois que le présent procédé n'est pas limité à une structure de données et que l'homme du métier pourra utiliser des modèles connus.

Le système comprend en outre comme on le voit sur la figure 1 un serveur de traitement de scénarii 5 également disposé dans le réseau opérateur 20. Ce serveur de traitement de scénarii 5 est en particulier un (ou plusieurs) équipements disposant d'espaces de stockage de données et de moyens de traitement. Ce serveur 5 peut être par ailleurs le même équipement que le serveur de gestion de périphériques 4.

### Saisie d'un scénario

Dans une première étape (a) du présent procédé, un utilisateur exprime sur une interface utilisateur d'un équipement 3 connecté au réseau internet 21 un scénario d'utilisation du périphérique 1. Cette étape peut comprendre une authentification de l'utilisateur de sorte à identifier quel est son boitier 2 (et donc quels sont ses périphériques 1). On comprendra que l'équipement 3 peut être disposé dans le réseau local du boitier 2, ou connecté de façon distante.

L'expression peut être faite de nombreuse façons, et consiste en particulier en la saisie d'une chaîne de caractères par l'utilisateur (on comprendra qu'elle peut être faite au clavier, mais également via une reconnaissance vocale, voire une reconnaissance de caractères) et/ou la sélection de paramètres dans une liste de possibilités (dite saisie prédictive, voir plus loin). L'expression du scénario est de façon préférée en langage naturel, prenant la forme d'une phrase éventuellement complexe, et plus ou moins grammaticalement exacte. Par exemple :
*« Je veux allumer la climatisation de mon salon quand quelqu'un est présent dans mon salon pendant 10 minutes » ou encore « ALLUMER CLIM DU SALON SI EST OCCUPE* +*10 MIN »*

Ces deux phrases définissent le même scénario impliquant au moins deux périphériques 1 :
- un climatiseur,
- un détecteur de présence.

Une pièce est évoquée : le salon. Le scénario peut se résumer sous la forme d'une requête conditionnelle : si une présence est détectée par un détecteur de présence (associé au salon) pendant une durée consécutive de 10 minutes, alors une requête d'allumage doit être envoyée au climatiseur.

Le présent procédé n'est limité à aucune façon d'exprimer le scénario, et il suffit d'obtenir des données descriptives de ce scénario (par exemple on pourra choisir des briques prédéterminées dans des listes). Dans la suite de la description, on prendra l'exemple préféré d'une saisie en langage naturel, et on montrera comment former de telles données descriptives du scénario.

### Analyse du scénario

Dans une étape (b), les données descriptives du scénario sont obtenues (soit directement depuis l'équipement 3, soit par traitement à partir de la saisie) par le serveur de traitement de scénarii 5 en vue de générer un fichier d'instructions de contrôle du périphérique 1.

Dans le mode de réalisation dans lequel la saisie est en langage naturel, cette génération nécessite préalablement un traitement avancé de la saisie. Le présent procédé vise en effet à permettre de créer le plus facilement possible tout scénario domotique constitué de briques logiques de la forme « si [événement/état(s)] alors [action(s)] ».

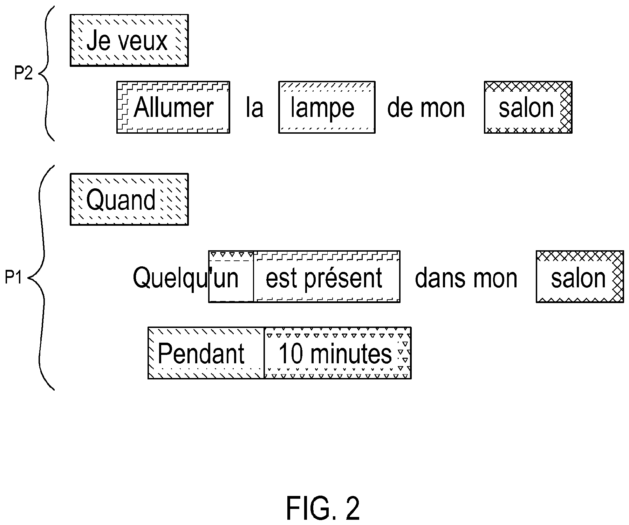

En référence à la **figure 2** qui illustre un exemple de saisie en langage naturel, la première partie (« si... ») est une partie de condition P1. Elle peut être très simple (« S'il est 18h »), ou être plus complexe et elle-même impliquer un ou plusieurs périphériques 1. Plusieurs combinaisons sont possibles et on peut même utiliser des opérateurs logiques comme ET et OU.

La deuxième partie (« alors... ») est une partie de conséquence P2. Elle correspond à l'action souhaitée sur le périphérique 1 si la condition est vérifiée. Chaque partie peut être un n-uplet de dimension quelconque.

L'identification des deux parties P1, P2 est avantageusement obtenue par analyse sémantique (mise en oeuvre par le serveur de traitement de scénarii 5) dans une première sous-étape (b1) de l'étape (b), en repérant des mots caractéristiques (par exemple « si », « quand », « lorsque » pour la partie de condition P1, « alors », « je veux », etc. pour la partie de conséquence P2).

A l'intérieur de la partie de conséquence (et le cas échéant à l'intérieur de la partie de condition si elle implique un périphérique), un n-uplet de paramètres définissant la partie est identifié. Il contient au moins :
- un type de périphérique,
- une action associée au type de périphérique dans une première base de connaissance accessible par (éventuellement en étant stockée sur) ledit boitier d'accès à internet 2 (ou un éventuel équipement satellite du boitier 2 tel qu'une STB ou un périphérique OTT, et de façon générale un équipement du réseau local généré par le boitier 2, comme expliqué), avec lequel le serveur 5 interagit.

Par « type de périphérique », on entend comme déjà expliqué la dénomination d'une classe de périphérique, comme « lampe » dans l'exemple représenté. L'action est quant à elle typiquement un verbe, et désigne tout type d'acte que le périphérique 1 pourrait réaliser. Dans notre exemple, l'action est « allumer ».

La première base de connaissances est une ontologie générale partagée entre tous les foyers qui définit ce qui est possible et ce qui ne l'est pas. Elle représente une base de connaissance globale - indépendamment du foyer - et théorique. Elle peut contenir une partie fixe de connaissance « une lampe peut s'allumer », « un smartphone a un seul propriétaire » ou « des volets roulants ne peuvent pas être contrôlés à distance » et une partie variable « un ordinateur peut avoir de 0 à 25 ports USB » de façon générale on comprend qu'elle associe au moins à chaque type de périphérique au moins une action réalisable, et si possible leur liste exhaustive.

Avantageusement, cette base de connaissance est une ontologie intelligente (qui ne traite pas forcément que des objets mais des concepts, par exemple « les objets qui peuvent s'allumer peuvent clignoter et donc faire des notifications ») et non pas une simple liste, car elle ne se contente pas de lister et de figer les possibilités mais de laisser une marge de manoeuvre pour pouvoir jouer avec cette base ; les relations non précisées ne sont pas considérées comme impossibles mais au contraire comme potentiellement possibles (ce n'est pas parce qu'une porte ne peut théoriquement pas s'allumer que cela est impossible). Cette ontologie est soit livrée par défaut dans le boitier d'accès à internet 2, soit constituée via le réseau opérateur 20, soit hébergée sur un serveur (en particulier le serveur 5). Dans tous les cas elle est gérée à distance par l'un des serveurs 4 et 5 et mise à jour en fonction des nouveaux périphériques 1 ou fonctionnalités offertes.

Il est à noter que le système peut ainsi apprendre que certains objets ont certaines fonctionnalités. Par exemple, toutes les caméras de sécurité ne peuvent pas faire de lumière, mais si un utilisateur entre « allumer lumière caméra », vu que cela n'est pas indiqué comme impossible dans l'ontologie globale, il va être notifié au serveur 4 que cette caméra est capable de s'allumer et le système va apprendre cette possibilité (après avoir testé qu'il peut bien la contrôler). Cette caméra devenant alors un objet allumable, elle devient du même coup un objet capable de faire des notifications d'après l'ontologie générale à la prochaine mise à jour.

Une seconde base de connaissances est stockée sur ledit boitier d'accès à internet 2 (ou un éventuel équipement satellite du boitier 2 tel qu'une STB ou un périphérique OTT, et de façon générale un équipement du réseau local généré par le boitier 2, comme expliqué), cette dernière est une autre ontologie, qui est cette fois spécifique du foyer.

Elle est complétée au fil du temps par l'utilisateur via l'interface. Elle est intrinsèque au foyer où le système est installé. De façon préférée, elle est initiée via la saisie préalable d'une description du foyer « j'ai 4 pièces dans la maison, la pièce 3 s'appelle la cuisine et il y a 2 lampes dedans, etc.».

Ainsi et grâce à l'intelligence des deux ontologies, le boitier 2 va comprendre qu'il est par exemple possible d'allumer une lampe dans la cuisine.

Afin d'utiliser ces informations, le n-uplet de paramètres de la partie de conséquence P2 peut comprendre en outre au moins un paramètre supplémentaire caractérisant le périphérique 1.

Par paramètre supplémentaire, on entend toute information additionnelle permettant de distinguer un périphérique d'un autre. Ce peut être un paramètre de localisation, par exemple « du salon » dans l'exemple de la figure 2, mais également tout attribut tel qu'une couleur, une taille, une disposition du périphérique, etc.

Chaque périphérique 1 connecté au boitier d'accès internet 2 peut être ainsi associé à au moins un paramètre supplémentaire dans la seconde base de connaissances. Il est à noter qu'un périphérique 1 peut n'être associé à aucun paramètre supplémentaire. Par exemple, si l'utilisateur possède une seule télévision chez lui, il n'a pas besoin d'en préciser la taille, la localisation ou autre pour l'identifier.

Grâce à la seconde base de connaissance, les moyens de traitement de données dudit serveur de traitement de scénarii 5 déterminent dans une deuxième sous-étape (b2) le périphérique 1 désigné dans le scénario en fonction des paramètres (autre que l'action) identifiés.

Le type de périphérique identifié peut suffire : si j'ai une seule télévision, il n'y aura pas d'ambiguïté, et saisir « allumer la télévision » suffira.

Dès lors qu'il y a deux périphériques du même type (deux lampes) dans la seconde base de connaissance, une ambiguïté doit être résolue. La détermination du périphérique 1 désigné dans le scénario peut alors également utiliser ledit paramètre supplémentaire identifié. Ainsi, le fait de rajouter « du salon » permet de distinguer la lampe de l'exemple de celle « de la cuisine ».

Toutefois, même en utilisant plusieurs paramètres supplémentaires, une ambigüité peut subsister : l'utilisateur peut avoir deux grandes lampes dans le salon. De façon préférée, l'étape (b2) comprend alors la sélection du périphérique 1 parmi lesdits périphériques correspondant aux paramètres identifiés. En d'autres termes, l'interface 3 propose une liste des périphériques (désignés par un identifiant absolu, par exemple leur nom/adresse IP/adresse MAC) entre lesquels l'ambigüité subsiste, et va le cas échéant modifier la deuxième base de connaissances pour éviter que l'ambigüité ne se reproduise. Il s'agit d'un exemple de mise en oeuvre d'un mode bidirectionnel pour lequel on verra d'autres avantages plus loin.

La saisie prédictive évoquée avant désigne un mode de réalisation dynamique dans lequel les étapes (a) et (b1) sont mises en oeuvre simultanément et dynamiquement, via une échange en temps réel entre l'équipement 3 et le serveur 5. Plus précisément, l'interface met à jour et propose ladite liste de possibilités à chaque fois qu'un paramètre du n-uplet est sélectionné par l'usager ou identifié par analyse sémantique, de telle sorte que la liste de possibilités comprenne seulement des possibilités de paramètres associés avec les paramètres déjà identifiés ou sélectionnés dans la première ou la seconde base de connaissance

Ainsi, au moment où l'utilisateur va indiquer le mot « allumer », le système va aller chercher en arrière-plan dans la première base de connaissance tous les objets qu'il est possible d'allumer dans toute la maison, que ce soit une lampe, une télévision ou un climatiseur et va les proposer à l'utilisateur sous forme d'une liste de types de périphériques. Ensuite, si le choix de l'utilisateur se porte sur le mot lampe, alors le système va aller chercher, en arrière-plan cette fois-ci, les pièces où se trouvent des lampes et va les proposer à l'utilisateur sous forme d'une liste de paramètres supplémentaires.

Une fois la saisie terminée (en d'autres termes toutes les ambiguïtés ont été résolues), la version textuelle du scénario définit les « données descriptives du scénario » qui vont permettre aux moyens de traitement de données du serveur de traitement de scénarii 5 de générer effectivement dans la dernière sous-étape (b3) le fichier d'instructions de contrôle du périphérique 1 en fonction d'au moins l'action identifiée (voir plus loin). En particulier, le ou les n-uplets de paramètres déterminés et le ou les périphériques identifiés constituent les données descriptives du scénario.

Il est à noter que la version textuelle du scénario est facilement exportable. Si l'on copie-colle ce texte dans un autre foyer, le serveur 5 vérifiera à son tour la cohérence du scénario en fonction de la propre ontologie de ce foyer et procédera aux ajustements (une « lampe du salon » restera une « lampe du salon » même si elle fonctionne différemment mais il faudra peut-être préciser laquelle s'il y en a plusieurs).

### Mode bidirectionnel

Dans le mode bidirectionnel, le moteur permet de proposer des possibilités à l'utilisateur mais est aussi capable d'apprendre au fur et à mesure des scénarii proposés par l'utilisateur et de mettre à jour la deuxième base de connaissance en conséquence.

Par exemple, si après avoir tapé « allumer », l'utilisateur entre « chauffe-eau » alors que celui-ci n'était pas proposé par la frappe prédictive (parce que la deuxième base de connaissances du boitier d'accès à internet 2 ne connait pas le chauffe-eau), cette base va apprendre qu'il y a un chauffe-eau (qui peut s'allumer) : l'interface va proposer à l'utilisateur de l'appairer puis il sera fonctionnel.

De même, si toutes les lampes sont dans le salon et que l'utilisateur demande d'allumer une lampe de la cuisine, l'interface demandera s'il y a une nouvelle lampe ou si une lampe a été déplacée. L'appairage des périphériques 1 se faisant via la même interface, l'ajout de la nouvelle lampe se fait dans la continuité du processus. De la même façon, le système étant capable d'agir sur les objets connectés, si plusieurs objets peuvent correspondre, par exemple s'il y a plusieurs lampes dans le salon et qu'on cherche laquelle (ou lesquelles) doit être allumée, il sera capable de les allumer à tour de rôle pour que l'utilisateur puisse facilement indiquer lesquelles sont concernées par son scénario sans avoir à se souvenir de leurs nom/IP/adresse MAC, etc.

Un autre avantage de ce mode bidirectionnel est que les scénarii sont créés par l'utilisateur et vérifiés au fur et à mesure de leur écriture (si quelque chose n'est pas possible, on vérifie auprès de l'utilisateur s'il s'agit d'une erreur ou de quelque chose de nouveau à ajouter dans l'ontologie du foyer). Aussi, si un périphérique 1 disparait et que le scenario en devient inexécutable, alors on notifie l'utilisateur de cette modification pour modifier le scenario.

### Génération d'un fichier d'instructions de commande

Les données descriptives d'un scénario d'utilisation du périphérique 1, qu'elles aient été exprimées directement ou déduites d'une saisie en langage naturel, sont inexploitables en l'état par une machine, et doivent être traitées.

Ce traitement consiste comme expliqué en une génération par des moyens de traitement de données du serveur de traitement de scénarii 5 d'un fichier d'instructions de contrôle du périphérique 1 à partir des données descriptives du scénario d'utilisation dudit périphérique 1 (en particulier le paramètre d'action).

Le fichier d'instructions de contrôle est avantageusement en langage du type XML (eXtensible Markup Language), notamment « .hez ».

A ce stade, le fichier d'instructions consiste en une simple traduction en un langage structuré des données descriptives du scénario, en particulier grâce à des outils sémantiques, et n'est toujours pas exploitable. Un traitement ultérieur en vue d'une exécution de sorte à contrôler le périphérique 1 conformément audit scénario d'utilisation dudit périphérique 1 est requis.

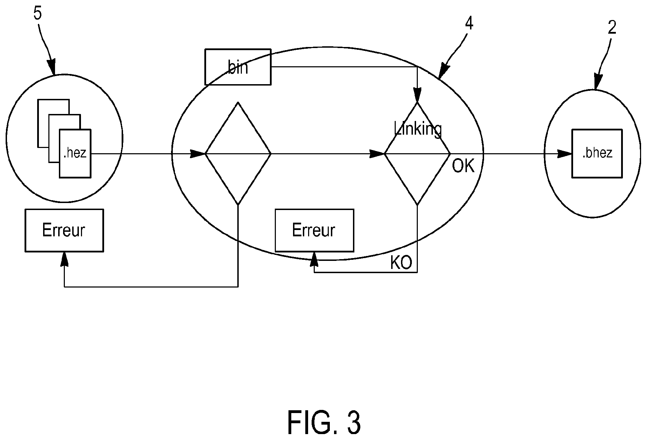

Pour cela le fichier d'instructions de contrôle est transmis au serveur de gestion de périphériques 4 évoqué précédemment, comme représenté par la **figure 3**.

### Traitement par le serveur de gestion

Comme expliqué précédemment, le serveur de gestion 4 est un équipement centralisé disposé au sein du réseau opérateur 20, disposant le cas échéant des listes de périphériques des clients. Le serveur 4 va recevoir le fichier d'instruction, contenant potentiellement des erreurs, et va générer un fichier proche du langage machine qui va pouvoir être utilisé par un boitier 2 pour le contrôle à distance des périphériques 1. Ce traitement se fait dans une boîte noire aux yeux de l'équipement 3, et de façon sécurisée puisque l'on est à l'intérieur du réseau opérateur 20. Cela permet une standardisation des scénarii, qui peuvent ainsi mettre en jeu n'importe quel type de périphérique 1 dont le serveur 4 aurait connaissance, et ce de façon universelle et transposable. De plus, les traitements mis en oeuvre par le serveur 4 n'entrainent aucune charge sur les équipements 3 ou les boitiers 2, pour le plus grand confort des utilisateurs.

Le serveur 4 réalise ainsi dans une étape (c) la compilation (si elle est possible) dudit fichier d'instructions de contrôle en un fichier binaire. Par fichier « binaire », on entend un fichier compilé, directement utilisable par opposition à des fichiers textuel interprétables par un être humain (dont le fichier d'instructions). Il est à noter que le fichier binaire peut être un code exécutable et/ou un « bytecode » (en français, « code octal »), c'est-à-dire un code intermédiaire entre les instructions machine et le code source, il n'est pas directement exécutable.

Dans le cas où le fichier d'instructions est en « .hez », le fichier binaire peut être en « .bhez » (binary hez).

Avant la compilation, le serveur 4 vérifie la syntaxe dudit fichier d'instructions de contrôle (des algorithmes de vérification de syntaxe vis-à-vis de règles de syntaxe prédéterminées sont bien connus de l'homme du métier), et la compilation n'est mise en oeuvre que si la syntaxe est valide. Dans le cas contraire, un message d'erreur est renvoyé à l'équipement 3, en demandant à l'utilisateur de corriger le scénario qu'il a saisi.

Si la syntaxe est correcte, une étape de « linking » est mise en oeuvre lors de la compilation. En effet, il est nécessaire de mettre en concordance les périphériques connus du serveur 4, et ceux mentionnés par l'utilisateur. Par exemple la « climatisation du salon » peut référer à un certain nombre d'appareils, lesquels ne sont naturellement pas commandés de la même façon.

L'étape (c) comprend ainsi avantageusement la désignation par son identifiant de type dans le fichier binaire de chaque périphérique 1 cité dans le fichier d'instructions de contrôle. Par exemple, par recoupement, le serveur 4 identifie que la « climatisation du salon » est l'équipement de type « AA » (cette référence renvoyant à un modèle).

L'identification du type des périphériques cités permet de simplifier la compilation en permettant l'utilisation de fichiers binaires de référence stockés sur le serveur 4, et chacun associés à un type de périphérique. Ces fichiers de référence sont des « squelettes » qu'il suffit de compléter et d'agencer pour obtenir le fichier binaire du scénario. Le serveur 4 peut à ce moment vérifier que le linking est valide, en d'autres termes qu'il n'y a pas de conflit ou de paramètre manquant.

### Instanciation et mise à disposition

Le fichier binaire ainsi généré est alors utilisable par le boitier d'accès à internet 2 (ou un éventuel équipement satellite du boitier 2 tel qu'une STB ou un périphérique OTT, et de façon générale un équipement du réseau local généré par le boitier 2, comme expliqué), vers lequel il est « poussé », en d'autres termes directement transféré via le réseau opérateur 20.

Alternativement, il peut être envoyé et stocké sur un serveur de partage de scénarii 6 (qui peut être en particulier le même serveur que le serveur 5, voire le serveur 4, ou un serveur du réseau internet 21).

Il peut ainsi être proposé à d'autres utilisateurs qui souhaiteraient exactement le même service (et disposeraient des mêmes périphériques 1). Par exemple, en référence à la figure 1, l'utilisateur qui crée le scénario (via l'équipement 3) peut être celui de la box 2a (s'il s'identifie en tant que tel, ou si par exemple il est dans le réseau local de cette box 2a). Le fichier binaire généré peut être poussé sur la box 2a, mais également mis à disposition sur le serveur de partage 6, et éventuellement récupéré par l'utilisateur d'une autre box, en l'espèce la box 2b.

Dans tous les cas, le fichier binaire est instancié dans une étape (d) sur le boitier d'accès à Internet qui l'a téléchargé, en vue d'une exécution de sorte à contrôler le périphérique 1 conformément audit scénario d'utilisation dudit périphérique 1. Par instanciation, on entend installation du fichier binaire (en respectant les contraintes et la topologie du réseau) sur le boitier 2.

Le procédé comprend le cas échéant une étape (e) d'exécution du fichier binaire par le boitier d'accès à Internet 2 (ou un éventuel équipement satellite du boitier 2 tel qu'une STB ou un périphérique OTT, et de façon générale un équipement du réseau local généré par le boitier 2, comme expliqué), i.e. sa mise en oeuvre en tâche de fond par un moteur d'exécution dédié implémenté sur le boitier 2, de sorte à contrôler le périphérique 1 conformément audit scénario d'utilisation dudit périphérique **1.**

Le scénario est alors automatiquement activé si les circonstances de son déclenchement sont réunies (10 minutes de présence dans notre exemple).

Il est à noter que quand un utilisateur veut télécharger un scénario depuis le serveur 6, il y a avantageusement une étape de vérification par le boitier 2:
- Le boitier 2 analyse les périphériques 1 du foyer (de l'utilisateur téléchargeur),
- Le boitier 2 renvoie les informations sur ces périphériques au serveur 6 ;
- Celui-ci analyse, au vu des périphériques 1 du foyer, les scénarii envisageables (i.e. les configurations similaires), et ne propose que ces derniers à l'utilisateur.

Comme déjà expliqué, l'équipement vers lequel le fichier binaire est poussé, instancié, puis le cas échéant exécuté, est de préférence le boitier 2, mais peut être tout équipement du réseau local généré par ce boitier 2, y compris d'autres périphériques 1 (comme expliqué en particulier une STB ou une box OTT).

### Serveur et système

Selon un deuxième aspect, l'invention concerne le serveur de gestion de périphériques 4 utilisé dans le procédé décrit précédemment.

Ce serveur 4 est disposé au sein du réseau opérateur 20 connecté au réseau internet 21. Il comprend des moyens de stockage (pour le stockage éventuel d'une base de données de périphériques 1 ou des fichiers binaires de référence) et des moyens de traitement de données configurés pour
- Recevoir depuis un serveur de traitement de scenarii 5 également disposé au sein du réseau opérateur 20 un fichier d'instructions de contrôle du périphérique 1 généré à partir de données descriptives d'un scénario d'utilisation d'au moins un périphérique 1 connecté à un boitier d'accès à Internet 2 de l'opérateur dudit réseau opérateur 20 ;
- Compiler ledit fichier d'instructions de contrôle en un fichier binaire ;
- Instancier le fichier binaire sur le boitier d'accès à Internet 2 en vue d'une exécution de sorte à contrôler le périphérique 1 conformément audit scénario d'utilisation dudit périphérique 1.

Selon un troisième aspect, l'invention concerne le serveur de traitement de scénarii 5 utilisé dans le procédé décrit précédemment.

Ce serveur de traitement de scénarii 5 est disposé dans le réseau opérateur 20 et est relié aux boitiers 2. Il comprend des moyens de stockage (pour l'éventuel stockage des bases de connaissance) et des moyens de traitement de données configurés pour mettre en oeuvre :
- Un module de réception d'un scénario d'utilisation du périphérique 1 exprimé préalablement en langage naturel sur une interface utilisateur d'un équipement 3 connecté au réseau internet 21 ;
- Un module d'analyse sémantique dudit scénario de sorte à identifier une partie de condition P1 du scénario et une partie de conséquence P2 du scénario, la partie de conséquence P2 étant définie sous la forme d'un n-uplet de paramètres dont au moins :
   ∘ un type de périphérique
   ∘ une action associée au type de périphérique dans une première base de connaissance accessible par ledit boitier d'accès à internet 2 ;
- un module de détermination du périphérique 1 désigné dans le scénario à partir d'une seconde base de connaissances stockée sur ledit boitier d'accès à internet 2 en fonction d'au moins le type de périphérique identifié,
- un module de génération d'un fichier d'instructions de contrôle du périphérique 1 en fonction d'au moins l'action identifiée, en vue d'une exécution de sorte à contrôler le périphérique 1 conformément audit scénario d'utilisation dudit périphérique 1.

Dans un autre aspect, le serveur de traitement 5 forme avec le serveur de gestion de périphériques 4 un système complet de gestion de périphériques domestiques. Peut leur être ajouté un serveur de partage de scénarii 6 pour la distribution des fichiers binaires, et les boitiers d'accès à internet 2 mettant en oeuvre le moteur d'exécution des fichiers binaires.

## Revendications

1. Procédé de contrôle à distance d'au moins un périphérique (1) connecté à un boitier d'accès internet (2), le boitier d'accès internet (2) étant relié au réseau internet (21) via un réseau opérateur (20), le procédé comprenant la mise en oeuvre d'étapes de :
(a) Expression en langage naturel sur une interface utilisateur d'un équipement (3) connecté au réseau internet (21) de données descriptives d'un scénario d'utilisation du périphérique (1) ;
(b) Génération par un serveur de traitement de scénarii (5) disposé au sein du réseau opérateur (20) d'un fichier d'instructions de contrôle du périphérique (1) à partir des données descriptives du scénario d'utilisation dudit périphérique (1) ;
(c) Compilation par un serveur de gestion de périphériques (4) également disposé au sein du réseau opérateur (20) dudit fichier d'instructions de contrôle en un fichier binaire ;
(d) Instanciation dudit fichier binaire sur un équipement du réseau local généré par le boitier d'accès à internet (2) en vue d'une exécution de sorte à contrôler le périphérique (1) conformément audit scénario d'utilisation dudit périphérique (1),
L'étape (b) comprenant la mise en oeuvre de sous-étapes de :
(b1) Analyse sémantique dudit scénario de sorte à identifier une partie de condition (P1) du scénario et une partie de conséquence (P2) du scénario, la partie de conséquence (P2) étant définie sous la forme d'un n-uplet de paramètres dont au moins :
- un type de périphérique
- une action associée au type de périphérique dans une première base de connaissance accessible par ledit un équipement du réseau local généré le boitier d'accès à internet (2) ;
(b2) Détermination du périphérique (1) désigné dans le scénario à partir d'une seconde base de connaissances stockée sur ledit équipement du réseau local généré par le boitier d'accès à internet (2) en fonction d'au moins le type de périphérique identifié,
(b3) Génération du fichier d'instructions de contrôle du périphérique (1) en fonction d'au moins l'action identifiée.

2. Procédé selon la revendication 1, dans lequel l'étape (c) comprend une vérification préalable par le serveur de gestion de périphériques (4) de la syntaxe dudit fichier d'instructions de contrôle, la compilation n'étant mise en oeuvre que si la syntaxe est valide.

3. Procédé selon l'une des revendications 1 et 2, dans lequel chaque périphérique (1) connecté à un boitier d'accès internet (2) de l'opérateur dudit un réseau opérateur (20) est associé dans le serveur de gestion de périphériques (4) à un identifiant de type de périphérique, l'étape (c) comprenant l'identification du type de chaque périphérique (1) cité dans le fichier d'instructions de contrôle.

4. Procédé selon la revendication 3, dans lequel un fichier binaire de référence est stocké sur le serveur de gestion de périphériques (4) pour chaque type de périphérique, l'étape (c) comprenant l'utilisation des fichiers binaires de référence associés à chacun des types de périphérique identifiés dans le fichier d'instructions.

5. Procédé selon l'une des revendications 3 et 4, dans lequel chaque périphérique (1) connecté à un boitier d'accès internet (2) de l'opérateur dudit un réseau opérateur (20) est référencé dans le serveur de gestion de périphériques (4) par un identifiant unique, l'étape (c) comprenant l'identification unique de chaque périphérique (1) cité dans le fichier d'instructions de contrôle.

6. Procédé selon la revendication 5, dans lequel une partie de l'identifiant unique est ledit identifiant de type de périphérique.

7. Procédé selon l'une des revendications 5 et 6, dans lequel chaque périphérique (1) référencé dans le serveur de gestion de périphériques (4) est associé à un ensemble de données informatiques comprenant
- au moins un attribut du périphérique (1), chaque attribut identifiant un élément contrôlable du périphérique (1) ;
- une adresse, notamment l'adresse MAC, du boitier d'accès internet (2) auquel le périphérique (1) est connecté.

8. Procédé selon l'une des revendications 1 à 7, dans lequel ledit équipement du réseau local généré par le boitier d'accès à internet (2) est le boitier d'accès à internet (2), l'étape (d) comprenant le transfert direct du fichier binaire au boitier d'accès à Internet (2).

9. Procédé selon la revendication 8, dans lequel l'étape (d) comprend le stockage du fichier binaire sur un serveur de partage de scénarii (6), en vue d'un téléchargement et d'une instanciation sur au moins un autre boitier d'accès à Internet (2).

10. Procédé selon l'une des revendications 1 à 9, comprenant une étape (e) d'exécution du fichier binaire par ledit équipement du réseau local généré par le boitier d'accès à Internet (2) de sorte à contrôler le périphérique (1) conformément audit scénario d'utilisation dudit périphérique (1).

11. Procédé selon l'une des revendications 1 à 10, dans lequel le fichier d'instructions de contrôle est en langage de balisage de type XML (eXtensible Markup Language), et le fichier binaire en bytecode.

12. Système comprenant un serveur de gestion de périphériques (4) et un serveur de traitement de scénarii (5) disposés au sein d'un réseau opérateur (20) connecté au réseau internet (21) ;
le serveur de traitement de scénarii (5) étant configuré pour :
- Analyser sémantiquement un fichier d'instructions de contrôle du périphérique (1) généré à partir de données descriptives en langage naturel d'un scénario d'utilisation d'au moins un périphérique (1) connecté à un boitier d'accès à Internet (2) de l'opérateur dudit réseau opérateur (20), de sorte à identifier une partie de condition (P1) du scénario et une partie de conséquence (P2) du scénario, la partie de conséquence (P2) étant définie sous la forme d'un n-uplet de paramètres dont au moins :
∘ un type de périphérique
∘ une action associée au type de périphérique dans une première base de connaissance accessible par un équipement du réseau local généré par ledit boitier d'accès à internet (2) ;
- Déterminer le périphérique (1) désigné dans le scénario à partir d'une seconde base de connaissances stockée sur ledit équipement du réseau local généré par ledit boitier d'accès à internet (2), en fonction d'au moins le type de périphérique identifié,
- Génération un fichier d'instructions de contrôle du périphérique (1) en fonction d'au moins l'action identifiée ;
le serveur de gestion de périphériques (4) étant configuré pour :
- Recevoir depuis le serveur de traitement de scenarii (5) ledit fichier d'instructions de contrôle du périphérique (1) ;
- Compiler ledit fichier d'instructions de contrôle en un fichier binaire ;
- Instancier le fichier binaire sur ledit équipement du réseau local généré par le boitier d'accès à Internet (2) en vue d'une exécution de sorte à contrôler le périphérique (1) conformément audit scénario d'utilisation dudit périphérique (1).

13. Système selon la revendication 12, comprenant en outre au moins un boitier d'accès à internet (2) configuré pour exécuter un fichier binaire de contrôle d'au moins un périphérique (1) connecté au boitier de connexion à internet (2).

14. Produit programme d'ordinateur comprenant des instructions de code pour l'exécution sur un ordinateur d'un procédé selon l'une des revendications 1 à 11 pour contrôler à distance d'au moins un périphérique (1) connecté à un boitier d'accès internet (2).

15. Moyens de stockage lisibles par un équipement informatique sur lesquels un produit programme d'ordinateur comprend des instructions de code pour l'exécution d'un procédé selon l'une des revendications 1 à 11 pour contrôler à distance d'au moins un périphérique (1) connecté à un boitier d'accès internet (2).

## Patentansprüche

1. Verfahren zur Fernsteuerung mindestens eines Peripheriegeräts (1), das mit einem Internetzugangskasten (2) verbunden ist, wobei der Internetzugangskasten (2) mit dem Internet (21) über ein Diensteanbieternetz (20) verbunden ist, wobei das Verfahren die Umsetzung der folgenden Schritte umfasst:
(a) Formulieren, in natürlicher Sprache über eine Nutzerschnittstelle einer mit dem Internet (21) verbundenen Ausrüstung (3), von beschreibenden Angaben eines Benutzungsszenarios des Peripheriegeräts (1);
(b) Erzeugen, durch einen innerhalb des Diensteanbieternetzes (20) angeordneten Szenarioverarbeitungsserver (5), einer Steuerbefehlsdatei des Peripheriegeräts (1) auf der Basis der beschreibenden Angaben des Benutzungsszenarios des Peripheriegeräts (1);
(c) Kompilieren, durch einen ebenfalls innerhalb des Diensteanbieternetzes (20) angeordneten Peripheriegeräteverwaltungsservers (4), der Steuerbefehlsdatei in eine binäre Datei;
(d) Umschreiben der binären Datei auf einer Ausrüstung des von dem Internetzugangskasten (2) erzeugten lokalen Netzes zwecks einer Ausführung, so dass das Peripheriegerät (1) gemäß dem Benutzungsszenario des Peripheriegeräts (1) gesteuert wird,
wobei der Schritt (b) die Umsetzung der folgenden Unterschritte umfasst:
(b1) semantisches Analysieren des Szenarios derart, dass ein Bedingungsteil (P1) des Szenarios und ein Folgeteil (P2) des Szenarios identifiziert werden, wobei der Folgeteil (P2) in Form eines Parameter-n-Tupels festgelegt wird, darunter mindestens:
- ein Peripheriegerätetyp
- eine Aktion, die dem Peripheriegerätetyp in einer ersten Wissensbasis zugeordnet ist, die von einer Ausrüstung des von dem Internetzugangskasten (2) erzeugten lokalen Netzes erreichbar ist;
(b2) Bestimmen des in dem Szenario bezeichneten Peripheriegeräts (1) auf der Basis einer zweiten Wissensbasis, die in der Ausrüstung des von dem Internetzugangskasten (2) erzeugten lokalen Netzes gespeichert ist, in Abhängigkeit von mindestens dem identifizierten Peripheriegerätetyp,
(b3) Erzeugen der Steuerbefehlsdatei des Peripheriegeräts (1) in Abhängigkeit von mindestens der identifizierten Aktion.

2. Verfahren nach Anspruch 1, wobei der Schritt (c) eine vorherige Überprüfung der Syntax der Steuerbefehlsdatei durch den Peripheriegeräteverwaltungsserver (4) umfasst, wobei die Kompilation erst dann umgesetzt wird, wenn die Syntax gültig ist.

3. Verfahren nach einem der Ansprüche 1 und 2, wobei jedes Peripheriegerät (1), das mit einem Internetzugangskasten (2) des Diensteanbieters des einen Diensteanbieternetzes (20) verbunden ist, in dem Peripheriegeräteverwaltungsserver (4) einer Peripheriegerätetypkennung zugeordnet ist, wobei der Schritt (c) die Identifizierung des Typs jedes in der Steuerbefehlsdatei genannten Peripheriegeräts (1) umfasst.

4. Verfahren nach Anspruch 3, wobei für jeden Peripheriegerätetyp eine binäre Referenzdatei im Peripheriegeräteverwaltungsserver (4) gespeichert wird, wobei der Schritt (c) die Verwendung der binären Referenzdateien umfasst, die jedem der in der Befehlsdatei identifizierten Peripheriegerätetyp zugeordnet sind.

5. Verfahren nach einem der Ansprüche 3 und 4, wobei jedes mit einem Internetzugangskasten (2) des Diensteanbieters des einen Diensteanbieternetzes (20) verbundene Peripheriegerät (1) in dem Peripheriegeräteverwaltungsserver (4) durch eine einzige Kennung gelistet ist, wobei der Schritt (c) die einzige Identifizierung jedes in der Steuerbefehlsdatei genannten Peripheriegeräts (1) umfasst.

6. Verfahren nach Anspruch 5, wobei ein Teil der einzigen Kennung die Peripheriegerätetypenkennung ist.

7. Verfahren nach einem der Ansprüche 5 und 6, wobei jedes in dem Peripheriegeräteverwaltungsserver (4) gelistete Peripheriegerät (1) einer Gruppe von IT-Daten zugeordnet ist, umfassend
- mindestens ein Attribut des Peripheriegeräts (1), wobei jedes Attribut ein steuerbares Element des Peripheriegeräts (1) identifiziert;
- eine Adresse, vor allem die MAC-Adresse, des Internetzugangskastens (2), mit dem das Peripheriegerät (1) verbunden ist.

8. Verfahren nach einem der Ansprüche 1 bis 7, wobei die Ausrüstung des von dem Internetzugangskasten (2) erzeugten lokalen Netzes der Internetzugangskasten (2) ist, wobei der Schritt (d) den direkten Transfer der binären Datei an den Internetzugangskasten (2) umfasst.

9. Verfahren nach Anspruch 8, wobei der Schritt (d) das Speichern der binären Datei in einem Szenariodateiserver (6) zwecks eines Herunterladens und einer Umschreibung auf mindestens einen anderen Internetzugangskasten (2) umfasst.

10. Verfahren nach einem der Ansprüche 1 bis 9, umfassend einen Ausführungsschritt (e) der binären Datei durch die Ausrüstung des von dem Internetzugangskasten (2) erzeugten lokalen Netzes, so dass das Peripheriegerät (1) gemäß dem Benutzungsszenario des Peripheriegeräts (1) gesteuert wird.

11. Verfahren nach einem der Ansprüche 1 bis 10, wobei die Steuerbefehlsdatei in der Markierungssprache von Typ XML (Extensible Markup Language) und die binäre Datei in Bytecode ist.

12. System, umfassend einen Peripheriegeräteverwaltungsserver (4) und einen Szenarioverarbeitungsserver (5), die in einem Diensteanbieternetz (20) angeordnet sind, das mit dem Internet (21) verbunden ist;
wobei der Szenarioverarbeitungsserver (5) konfiguriert ist, um:
- eine Steuerbefehlsdatei des Peripheriegeräts (1), die auf der Basis von beschreibenden Angaben in natürlicher Sprache eines Benutzungsszenarios mindestens eines Peripheriegeräts (1), das mit einem Internetzugangskasten (2) des Diensteanbieters des Diensteanbieternetzes (20) verbunden ist, semantisch zu analysieren, um einen Bedingungsteil (P1) des Szenarios und einen Folgeteil (P2) des Szenarios zu identifizieren, wobei der Folgeteil (P2) in Form eines Parameter-n-Tupels festgelegt wird, darunter mindestens:
∘ ein Peripheriegerätetyp
∘ eine Aktion, die dem Peripheriegerätetyp in einer ersten Wissensbasis zugeordnet ist, die von einer Ausrüstung des von dem Internetzugangskasten (2) erzeugten lokalen Netzes erreichbar ist;
- Bestimmen des in dem Szenario bezeichneten Peripheriegeräts (1) auf der Basis einer zweiten Wissensbasis, die in der Ausrüstung des von dem Internetzugangskasten (2) erzeugten lokalen Netzes gespeichert ist, in Abhängigkeit von mindestens dem identifizierten Peripheriegerätetyp,
- Erzeugen einer Steuerbefehlsdatei des Peripheriegeräts (1) in Abhängigkeit von mindestens der identifizierten Aktion;
wobei der Peripheriegeräteverwaltungsserver (4) konfiguriert ist, um:
- von dem Szenarioverarbeitungsserver (5) die Steuerbefehlsdatei des Peripheriegeräts (1) zu erhalten;
- die Steuerbefehlsdatei in eine binäre Datei zu kompilieren;
- die binäre Datei auf der Ausrüstung des von dem Internetzugangskasten (2) erzeugten lokalen Netzes zwecks einer Ausführung umzuschreiben, so dass das Peripheriegerät (1) gemäß dem Benutzungsszenario des Peripheriegeräts (1) gesteuert wird.

13. System nach Anspruch 12, umfassend ferner mindestens einen Internetzugangskasten (2), der konfiguriert ist, um eine binäre Steuerdatei mindestens eines mit den Internetverbindungskasten (2) verbundenen Peripheriegeräts (1) auszuführen.

14. Rechnerprogrammprodukt, umfassend Codebefehle für die Ausführung auf einem Rechner eines Verfahrens nach einem der Ansprüche 1 bis 11 der Fernsteuerung mindestens eines mit einem Internetzugangskasten (2) verbundenen Peripheriegeräts (1).

15. Speichermittel, die von einer IT-Ausrüstung lesbar sind, auf denen ein Rechnerprogrammprodukt Codebefehle für die Ausführung eines Verfahrens nach einem der Ansprüche 1 bis 11 der Fernsteuerung mindestens eines mit einem Internetzugangskasten (2) verbundenen Peripheriegeräts (1) umfasst.

## Claims

1. A remote control method of at least one peripheral (1) connected to an internet access box (2), the internet access box (2) being connected to the internet network (21) via an operator network (20), the method comprising the implementation of steps of:
(a) Expression in natural language on a user interface of equipment (3) connected to the internet network (21) of data describing a use scenario of the peripheral (1);
(b) Generation by a scenario processing server (5) disposed within the operator network (20) of a control instruction file of a peripheral (1) based on the descriptive data of the use scenario of said peripheral (1);
(c) Compilation by a peripheral management server (4) also disposed within the operator network (20), of said control instruction file into a binary file;
(d) Instantiation of said binary file on local network equipment generated by the internet access box (2) for the purpose of execution so as to control the peripheral (1) according to said use scenario of said peripheral (1),
Step (b) comprising the implementation of substeps of:
(b1) Semantic analysis of said scenario so as to identify a condition portion (P1) of the scenario and a consequence portion (P2) of the scenario, the consequence portion (P2) being defined in the form of a n-tuple of parameters including at least:
- one type of peripheral
- one action associated with the peripheral type in a first knowledge base accessible by said equipment of the local network generated by the internet access box (2);
(b2) Determination of the peripheral (1) designated in the scenario based on a second knowledge base stored on said equipment of the local network generated by the internet access box (2) depending on at least the identified peripheral type,
(b3) Generation of the control instruction file of the peripheral (1) depending on at least the identified action.

2. The method according to claim 1, wherein step (c) comprises prior verification by the peripheral management server (4) of the syntax of said control instruction file, the compilation being implemented only if the syntax is valid.

3. The method according to one of claims 1 and 2, wherein each peripheral (1) connected to an internet access box (2) of the operator of said one operator network (20) is associated in the peripheral management server (4) with a peripheral type identifier, step (c) comprising the identification of the type of each peripheral (1) cited in the control instruction file.

4. The method according to claim 3, wherein a binary reference file is stored on the peripheral management server (4) for each peripheral type, step (c) comprising the use of binary reference files associated with each of the peripheral types identified in the instruction file.

5. The method according to one of claims 3 and 4, wherein each peripheral (1) connected to an internet access box (2) of the operator of said one operator network (20) is referred to in the peripheral management server (4) by a unique identifier, step (c) comprising the unique identification of each peripheral (1) cited in the control instruction file.

6. The method according to claim 5, wherein a portion of the unique identifier is said peripheral type identifier.

7. The method according to one of claims 5 and 6, wherein each peripheral (1) referred to in the peripheral management server (4) is associated with a set of computer data comprising
- at least one peripheral (1) attribute, each attribute identifying a controllable element of the peripheral (1);
- an address, particularly the MAC address, of the internet access box (2) to which the peripheral (1) is connected.

8. The method according to one of claims 1 to 7, wherein said equipment of the local network generated by internet access box (2) is the internet access box (2), step (d) comprising the direct transfer of the binary file to the Internet access box (2).

9. The method according to claim 8, wherein step (d) comprises the storage of the binary file on a scenario sharing server (6), for the purpose of downloading and instantiation on at least one other internet access box (2).

10. The method according to one of claims 1 to 9, comprising a step (e) of execution of the binary file by said local network equipment generated by the internet access box (2) so as to control the peripheral (1) according to said use scenario of said peripheral (1).

11. The method according to one of claims 1 to 10, wherein the control instruction file is in a markup language of the XML (eXtensible Markup Language) type, and the binary file in bytecode.

12. A system comprising a peripheral management server (4) and a scenario processing server (5) disposed within an operator network (20) connected to the internet network (21);
the scenario processing server (5) being configured for:
- Analyzing semantically a control instruction file of the peripheral (1) generated based on descriptive data in natural language of a use scenario of at least one peripheral (1) connected to an internet access box (2) of the operator of said operator network (20), so as to identify a condition portion (P1) of the scenario and a consequence portion (P2) of the scenario, the consequence portion (P2) being defined in the form of a n-tuple of parameters including at least:
∘ one peripheral type
∘ one action associated with the peripheral type in a first knowledge base accessible by an equipment of the local network generated by said internet access box (2);
- Determining the peripheral (1) designated in the scenario based on a second knowledge base stored on said equipment of the local network generated by said internet access box (2), depending on at least the identified peripheral type,
- Generation of a control instruction file of the peripheral (1) depending on at least the identified action;
the peripheral management server (4) being configured for:
- Receiving from the scenario processing server (5) said control instruction file of the peripheral (1);
- Compiling said control instruction file into a binary file;
- Instantiating the binary file on said local network equipment generated by the internet access box (2) for the purpose of execution so as to control the peripheral (1) according to said use scenario of said peripheral (1).

13. The system according to claim 12, further comprising at least one internet access box (2) configured to execute a binary control file of at least one peripheral (1) connected to the internet access box (2) .

14. A computer program product comprising code instructions for the execution on a computer of a method according to one of claims 1 to 11 for remote control of at least one peripheral (1) connected to an internet access box (2).

15. Storage means readable by computer equipment on which a computer program product comprises code instructions for the execution of a method according to one of claims 1 to 11 for remote control of at least one peripheral (1) connected to an internet access box (2) .
